# EUROPÄISCHE PATENTSCHRIFT

(11) **EP 1 348 651 B1**
(45) Veröffentlichungstag und Bekanntmachung des Hinweises auf die Patenterteilung: **18.05.2005**
(21) Anmeldenummer: 03005748.3
(22) Anmeldetag: 14.03.2003
(51) Int. Cl.: B65G 47/90, B65H 31/30, B65H 31/32

(54) **Fördereinrichtung und Verfahren zur Überführung von Stapeln aus Papier oder dgl. auf einen Abtransportförderer**
Conveying device and method for transferring stacks of paper or the like onto a removing conveyor
Dispositif de transport et procédé pour transférer des piles de papier ou similaire sur un conveyeur d'évacuation

(30) Priorität: 28.03.2002 DE 10214684
(43) Veröffentlichungstag der Anmeldung: 01.10.2003
(73) Patentinhaber: bielomatik Leuze GmbH + Co KG, 72639 Neuffen (DE)
(72) Erfinder: Meyer, Axel, 72574 Bad Urach-Hengen (DE)
(74) Vertreter: Patentanwälte Ruff, Wilhelm, Beier, Dauster & Partner

(56) Entgegenhaltungen:
- EP-A- 0 465 916
- EP-A- 0 514 783

## Beschreibung

Die Erfindung betrifft eine Fördereinrichtung für durch Blattlagen gebildete Stapel aus Papier oder dgl. und ein Verfahren zur Überführung derartiger Stapel zwischen einer Antransportstation und einem Abtransportförderer.

Die EP 465 916 B beschreibt eine derartige Fördereinrichtung und ein Verfahren. Sie wird in Einrichtungen eingesetzt, in denen Stapel aus Flachmaterialien in Reihen nebeneinander gebildet werden, beispielsweise in sog. Kleinformat-Querschneidern, die aus Papierbahnen Stapel von Gebrauchsformat-Blättern herstellen, beispielsweise Kopierpapier-Packen. Die in einer Reihe nebeneinander ankommenden Stapel werden in der Fördereinrichtung auf Abtransportförderer übergeben, die quer zur Antransportrichtung in der Maschine laufen. Dort werden die einzelnen Reihen aneinander angeschlossen, damit die einzelnen Stapel auf einen vorgegebenen Abstand vereinzelt werden können. So laufen sie meist Packmaschinen zu.

Die EP 465 916 B beschreibt eine solche Einrichtung, die in der Abtransportstation zwei im wesentlichen parallel zueinander verlaufende Abtransportförderstrecken hat, auf die die Stapelreihen wahlweise abgelegt werden können. Dies hat beim Normalbetrieb den Vorteil, dass der meist sehr große Austoß der Herstellungsmaschine für die Stapel auf mehrere Verpackungsstrecken verteilt werden kann. Ferner ergibt sich die Möglichkeit, bei Störung oder Ausfall in einer der Verpackungsstrecken wahlweise nur eine der Abtransportförderstrecken zu beschicken, bei ggf. verringerter Leistung der Maschine, jedoch ohne Maschinenstop.

Die EP 514 783 B beschreibt, aufbauend auf diesem Prinzip, eine Teilung der Greiferreihe, die die Stapelreihe erfasst, in der Mitte, so dass jeweils ein Teil der Stapelreihe auf jeder der beiden Abtransportstrecken abgelegt werden kann.

### Aufgabe und Lösung

Die Erfindung bezweckt, die Fördereinrichtung und das Verfahren nach der EP 465 916 B weiter zu verbessern und insbesondere bei großer Flexibilität der Arbeitsweise durch die Übergabe bedingte Totzeiten zu vermeiden und somit einen störungsfreien Ablauf der Übergabe auch bei hohen Arbeitsgeschwindigkeiten sicherzustellen.

Diese Aufgabe wird durch eine Fördereinrichtung gelöst, bei der jeder Stapelposition ein Greiferpaar aus zwei Greifern zugeordnet ist, die voneinander unabhängig bewegbar und zum Ergreifen bzw. Freigeben der Stapel betätigbar sind. Dies macht es möglich, dass jeweils einer der Greifer eines Paars schon wieder in eine Position gefahren werden kann, in der er den nächsten Stapel ergreifen kann, während der andere Greifer des Paars noch in Eingriff mit dem vorigen Stapel ist, diesen über der Abtransportförderstrecke positioniert und schließlich freigibt. Durch die Tatsache, dass somit jeweils ein Greifer eines Paars bereits die Rückbewegung durchführt, während der andere eine Stapelreihe noch zieht oder positioniert, steht für die Übergabe von der Stapelposition zu den Abtransportförderstrecken nahezu die gesamte Zeit zur Verfügung, die die Stapelbildung bzw. der Antransport der Stapel benötigt. Dies kann eine relativ kurze Zeit sein, da Kleinformatquerschneider infolge der hohen Arbeitsgeschwindigkeiten und der Tatsache, dass mehrlagig gearbeitet wird, zahlreiche Stapel pro Minute fertig stellen.

Die beiden Greifer eines Paars können, obwohl sie einander längs der Übergaberichtung kollisionsfrei passieren sollen, so ausgebildet sein, dass sie die Stapel jeweils zentrisch greifen, so dass bei der Übergabe keine Drehtendenz auf die Stapel einwirkt. Dies kann beispielsweise durch entsprechenden Höhenversatz in den Fahrpositionen geschehen.

Die Greiferpaare können jeweils an einem gemeinsamen Greiferträger angeordnet sein, der Führungen für sie beinhaltet. Sie sind von jeweils einem Längsantrieb unabhängig voneinander beweglich, der z.B. als umlaufender Zugriemen ausgebildet sein kann. Zum Bewegen der einzelnen Greiffinger jedes Greifers können in die auf den Führungen laufenden Greiferschlitten oder -wagen Greifantriebe integriert sein, beispielsweise Linearantriebe, Pneumatik- oder Hydraulikzylinder.

Um eine Stapelreihe auch dann auf dem von der Stapelposition weiter entfernten Abtransportförderer platzieren zu können, kann die in Übergaberichtung davor liegende Förderstrecke absenkbar und durch eine Übergabebrücke überbrückbar sein. Es ist dann möglich, die nächste Stapelreihe auf den zweiten Förderer zu ziehen, während der erste Förderer bereits die vorige Stapelreihe in Abtransportrichtung bewegt. Somit können ganze Stapelreihen wechselweise auf zwei oder, was ebenfalls möglich ist, auch mehrere zueinander parallele Förderstrecken abgelegt werden, wobei jeweils die näher zur Stapelposition liegenden Förderstrecken absenkbar und/oder überbrückbar sind.

Es ist auch möglich, eine gemeinsam ergriffene Stapelreihe auf zwei Förderstrecken aufzuteilen. Dies geschieht gemäß der Erfindung dadurch, dass diese Stapelreihe gemeinsam jeweils von entsprechenden Greifern des Greiferpaares ergriffen werden, die eine Greifergruppe bilden und auch gemeinsam in Übergaberichtung bewegt werden. Sie können jedoch einzeln oder als Teilgruppe geöffnet werden, so dass jeweils ein Teil einer Stapelreihe auf den unterschiedlichen Abtransportförderstrecken abgelegt werden können. Außer einer z.B. hälftigen Aufteilung einer Stapelreihe könnte auch ein anderes Teilungsmuster verwendet werden, beispielsweise die Ablage jedes zweiten Stapels auf jeder der Stapelreihen, was unter Umständen zu einer Vergleichmäßigung des Stapelflusses auf den Förderstrecken und entsprechende Verkürzung der Vorrichtung zum Anschließen der Stapelreihen aneinander führen kann.

Die Rückführung jeweils eines der beiden Greifer eines Paares zur Stapelposition, also der Leer-Rücktransport, kann in einer Überfahrposition stattfinden, in der beide Greiffinger so hochgefahren sind, dass sie über die Stapel, die vom anderen Greifer des Paars überführt werden, hinweglaufen können.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ein Ausführungsbeispiel der Erfindung ist in den Zeichnungen dargestellt und wird im Folgenden näher erläutert. In den Zeichnungen zeigen:
- Fig. 1: eine schematische Draufsicht auf eine Fördereinrichtung nach der Erfindung,
- Fig. 2: eine schematische Schnittdarstellung nach der Linie II-II in Fig. 1,
- Fig. 3: einen schematischen Querschnitt durch einen Greiferträger für ein Greiferpaar,
- Fig. 4: eine Seitenansicht des Greiferträgers nach Fig. 3,
- Fig. 5 und 6, 7, 8 sowie 9 und 10: zeigen jeweils in Draufsicht und Schnitt entsprechend Figuren 1 und 2 verschiedene Verfahrensschritte für die Stapelübergabe
- Fig. 11 bis 15: jeweils in schematischer Draufsicht, eine Vorrichtung mit geänderter Verfahrensweise und
- Fig. 16: eine schematische Teilansicht einer Papierverarbeitungsmaschine, die die Fördereinrichtung enthält.

### Beschreibung eines bevorzugten Ausführungsbeispiels

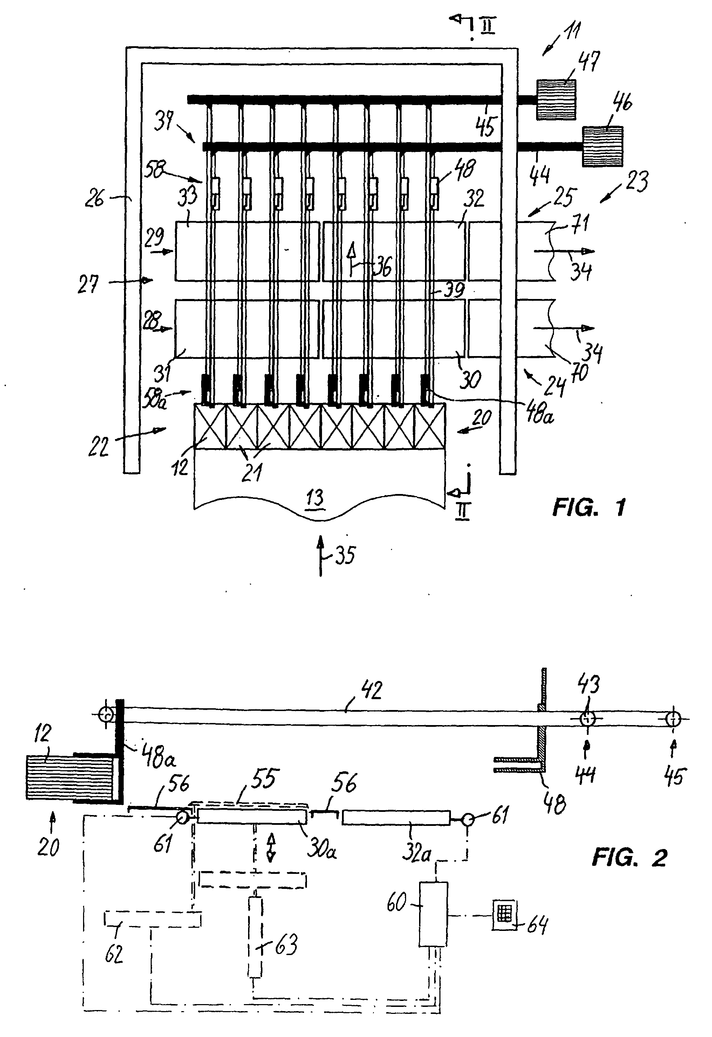

Die Figuren 1 bis 10 zeigen in stark schematisierter Darstellungsweise eine Fördereinrichtung 11 für aus Blattlagen gebildete Stapel 12.

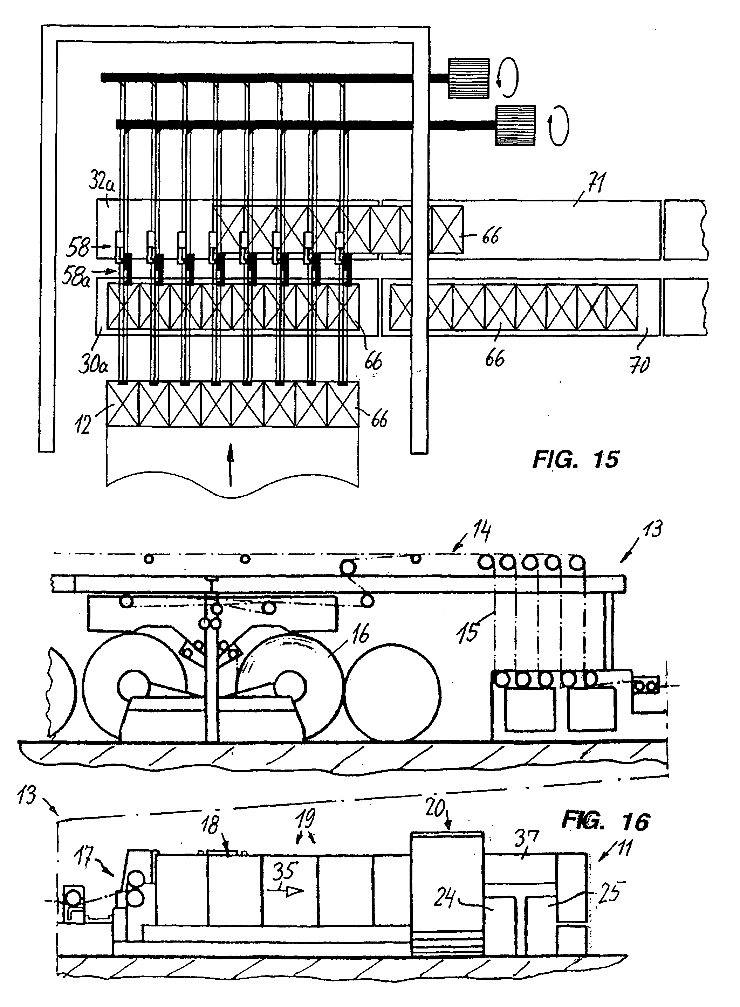

Die Fördereinrichtung 11 ist nahe dem Ende einer Papierverarbeitungsmaschine 13 angeordnet, die in Fig. 16 gezeigt ist. Beim Ausführungsbeispiel handelt es sich um einen Kleinformatquerschneider, der Abrollungen 14 für fünf Papierbahnen 15 enthält, die jeweils von einer großen Papierrolle 16 stammen und die übereinanderliegend gemeinsam bearbeitet werden. Ein Längsschneider 17 schneidet die Papierbahnen 15 abfallfrei in formathaltige Längsstreifen, die dann mit einem Querschneider 18 auf das entsprechende Format geschnitten und in weiteren Stationen 19 in einen geschuppten Bogenstrom überführt, geprüft, durch Ausschleusung von fehlerhaften Bögen getrennt und schließlich in einer Stapelstation 20 zu Blattstapeln der gewünschten Höhe (z.B. 500 Blatt) gesammelt werden. Entsprechend der Zahl der Nutzen, d.h. der nebeneinanderliegenden Stapel, die aus einer Papierbahnbreite geschnitten werden, bilden sich also in der Stapelstation zahlreiche Stapel 12, die in einer Stapelreihe 66 nebeneinander in entsprechenden Stapelpositionen 21 liegen.

Die Stapelstation 20 mit der Reihe von nebeneinanderliegenden Stapelpositionen 21 bildet also eine Antransportstation 22 für die Fördereinrichtung 11. Diese dient zur Übergabe der Stapel 12 auf einen Abtransport-Förderer 23, der zwei parallel zueinander verlaufende Abtransport-Förderstrecken 24, 25 aufweist.

Im dargestellten Beispiel sind zwei Abtransport-Förderstrecken 24, 25 vorgesehen, die sich zur gleichen Seite (nach rechts) erstrecken und an deren Ende je eine nicht dargestellte Verpackungseinrichtung für die Stapel vorgesehen sind. Es ist aber auch möglich, mehr als eine Förderstrecke vorzusehen und/oder diese auch T-förmig nach beiden Seiten verlaufen zu lassen, obwohl die vorliegende Anordnung die raumsparendere ist. Der Abtransport-Förderer besteht aus von Antrieben 61, z.B. steuerbaren Elektromotoren, angetriebenen Bandförderern.

Die von einem angedeuteten Rahmen 26 umgebene Fördereinrichtung schließt eine Übergabestation 27 ein, in die der Abtransport-Förderer 23 hineinreicht. Er hat im Bereich der Übergabestation Übergabepositionen 28, 29 auf den beiden Förderstrecken 24, 25. In Fig. 1 sind diese in zwei unabhängig voneinander antreibbare Teilförderstrecken 30, 31, 32, 33 aufgeteilt. Anschließend an die Teilförderstrecken sind auch als Stauförderer bezeichnete Transportbänder 70, 71 zum Weitertransport in Abtransportrichtung vorgesehen.

Die Abtransportrichtung 34 des Abtransport-Förderers ist quer, vorzugsweise unter 90° zur Antransportrichtung 35, in der die Stapel von der Maschine 13 angeliefert werden (vgl. Fig. 1 und 16). Diese Antransportrichtung stimmt mit der Übergaberichtung 36 überein, mit der Übergabeförderer 37 die Stapel 12 in den Übergabepositionen 28, 29 auf die Abtransport-Förderstrecken 24, 25 legen.

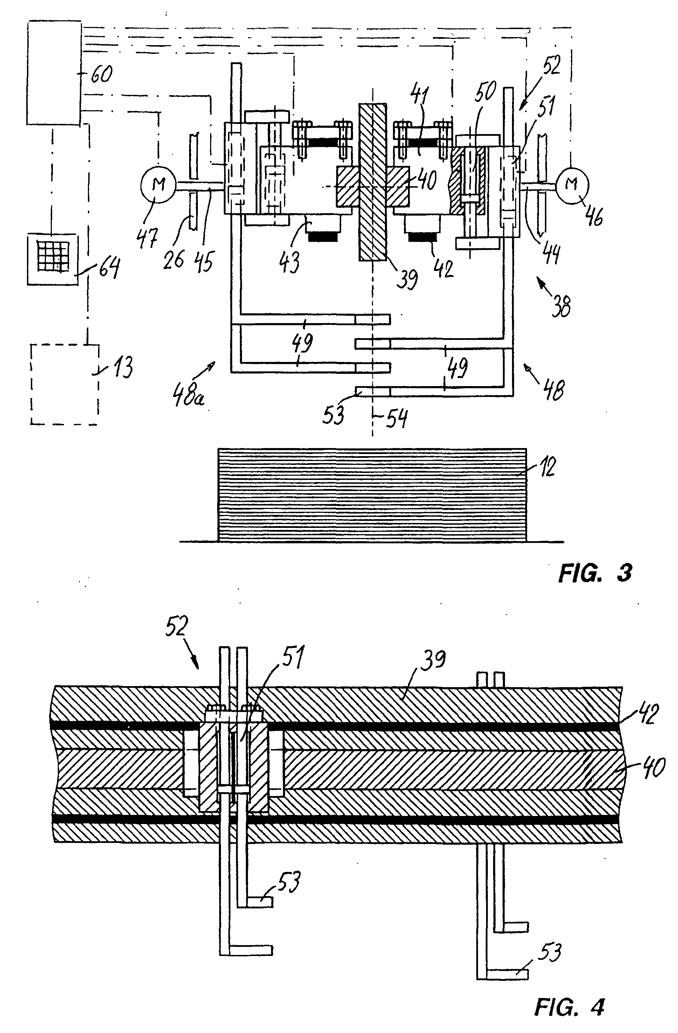

Der Übergabeförderer 37 enthält für jede Stapelposition 21 ein Greiferpaar 38, das an einem gemeinsamen Greiferträger 39 (Fig. 3 und 4) in Übergaberichtung hin und zurück bewegbar gelagert ist.

Fig. 3 zeigt den Greiferträger 39, an dem zu beiden Seiten Führungen 40 angebracht sind. Diese können Führungsschienen, aber auch Kugelführungen oder andere Linearführungen sein. Auf ihnen laufen Greiferschlitten bzw. -wagen 41. In Längsrichtung sind diese voneinander unabhängig angetrieben, und zwar mittels Zugelementen 42 in Form von umlaufenden Riemen oder Ketten, die um Führungs- bzw. Antriebsräder 43 laufen, die über je eine Antriebswelle 44, 45 von Antriebsmotoren 46, 47 angetrieben sind (s. auch Fig. 1 und 2).

An jedem der Greiferschlitten 41 ist ein Greifer 48 mit zwei in vertikaler Richtung beweglichen Greiferfingern 49 angebracht. Jedem Greifer ist ein pneumatischer oder hydraulischer Bewegungszylinder 50 für die Hebe- und Senkeinrichtung des gesamten Greifers 48, also beider Greiferfinger 49 zusammen, zugeordnet und ferner sind insbesondere aus Fig. 4 zu erkennende Einzelbewegungszylinder 51 für jeden Greiferfinger 49 vorgesehen. Ggf. könnten diese, entsprechend gesteuert, auch die Aufgabe des gemeinsamen Zylinders 50 übernehmen. Diese drei Zylinder, die über bewegliche Schläuche oder dgl. mit Druckluft oder Hydraulikflüssigkeit versorgt werden, bilden die Greiferbetätigung 52 für jeden Greifer. Die beiden Greifer 48, 48a eines Greiferpaares 38 sind im Prinzip gleich, jedoch spiegelbildlich zueinander ausgebildet. Die Greiferfinger 49 beider zusammengehöriger Greifer sind so doppelt gekröpft, dass ihre Greiferspitzen 53 in einer vertikalen Mittelebene 54 durch den Träger 39 liegen. Sie sind dabei so gesteuert, dass sie kollisionsfrei längs bewegt werden können (s. Fig. 3 und 4).

Die jeweils zur gleichen Seite des Trägers 39 angeordneten Greifer der nebeneinander angeordneten Greiferpaare (beim Ausführungsbeispiel acht) bilden jeweils eine Greifergruppe 58, 58a, die also jeweils aus acht Greifern 48, 48a bestehen. Jede dieser Greifergruppen hat einen eigenen Antrieb 44, 46 bzw. 45, 47, die beispielsweise hintereinander versetzt angeordnet sein können, wie Fig. 1 und 2 zeigen. Die Greiferbetätigungen 52 sind für die beiden Greifergruppen 58, 58a ebenfalls getrennt steuerbar, vorzugsweise auch innerhalb der einzelnen Gruppen unabhängig voneinander.

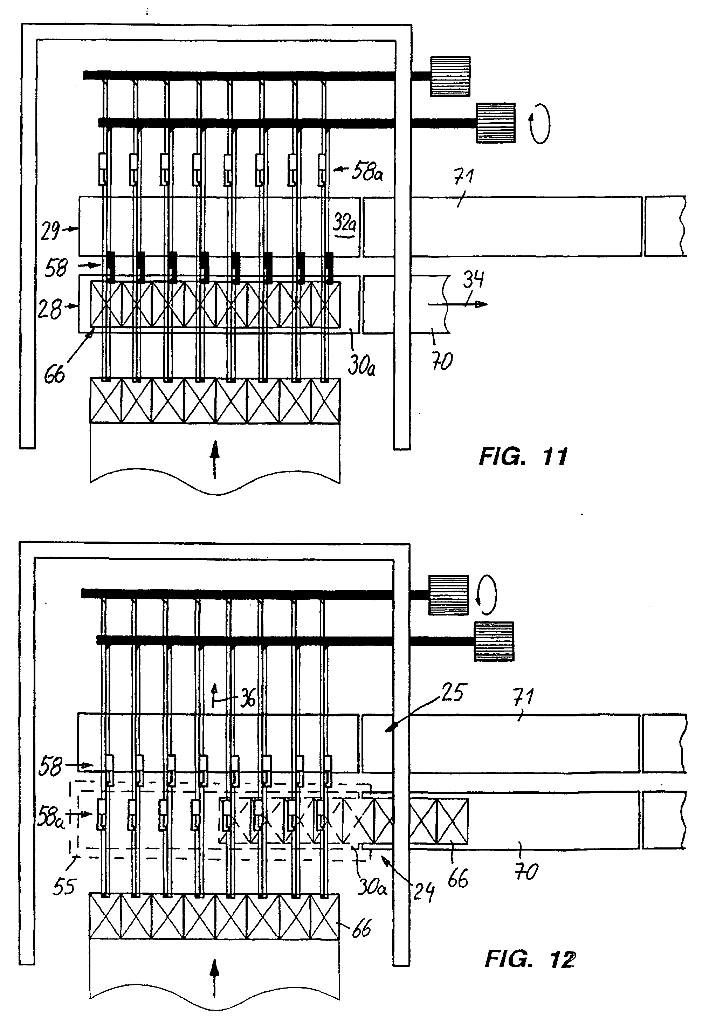

Fig. 2 zeigt in strichlierten Linien eine Ergänzung, die für die Verfahrensweise nach den Figuren 11 bis 15 vorgesehen ist. Dort sind die Abtransport-Förderstrecken 24, 25 nicht mittig geteilt, sondern jeweils über die gesamte Länge der Übergabepositionen 28, 29 zusammenhängend. Der Förderer 30a, der der Stapelstation 20 am nächsten liegt, ist um etwas mehr als die vorgesehene Stapeldicke absenkbar und durch eine Übergabebrücke 55 so überbrückbar, dass ein Stapel 12 herübergezogen werden kann, selbst wenn auf der abgesenkten Abtransport-Förderstrecke 24 noch ein Stapel liegt. In Fig. 2 und den entsprechenden weiteren Figuren dieser Art sind die Greifer so dargestellt, dass sie einen großen Teil des Stapels erfassen. In der Praxis werden sie allerdings nur den Bereich des vorderen Randes klemmen, so dass der Rest des Stapels auf zwischen der Stapelstation und den Förderstrecken vorgesehene Abdecktisch oder -bleche 56 bzw. über die Übergabebrücke 55 gezogen oder geschleppt werden. Der Boden der Stapelboxen, in denen die Stapel 12 gebildet werden, die Abdecktische 56, die Übergabebrücke 55 und die Förderer 30 bis 33 sowie die Förderer 30a in Hubposition liegen in einem Nievau. Die Übergabebrücke 55 kann mehrteilig, z.B. teleskopartig ausgeführt sein und über eine nicht dargestellte Mechanik wahlweise ein- und ausgefahren werden. Details der Ausbildung und des Antriebs sind aus der EP 465 916 B zu entnehmen, auf die hier ausdrücklich Bezug genommen wird.

Antrieb und Steuerung der Fördereinrichtung, die einerseits von Arbeitstakt- und Geschwindigkeit der papierverarbeitenden Maschine 13 abhängig ist und andererseits die Arbeitsweise des Abtransport-Förderers 23 steuert, kann auf verschiedene Weise geschehen. Grundsätzlich wäre eine mechanische Steuerung über Schaltgetriebe etc. möglich, jedoch ist eine elektrische Steuerung, die andererseits auf pneumatische oder hydraulische Antriebsorgane einwirken kann, vorteilhafter. Die genaue Weg- und Taktsteuerung kann vorzugsweise mit elektrischen Schrittmotoren, Linearmotoren etc. vorgenommen werden.

In den Figuren 2 und 3 sind schematisch im Blockschaltbild Steuerungsverbindungen angedeutet. Die Steuerung wird von einem gemeinsamen Steuergerät 60 vorgenommen, dessen Kernstück wenigstens ein Mikroprozessor ist und der Signale von den einzelnen Antrieben empfängt und an sie abgibt, als da sind: Die Antriebsmotoren 46, 47 für die Greiferbewegung in Übergaberichtung, die Bewegungszylinder 50, 51 für die einzelnen Greifer 48, 48a bzw. ihre Pneumatik- oder Hydrauliksteuerung; Antriebe 61 für die einzelnen Teilförderer 30 bis 33 und die weiterführenden Förderstrecken 24, 25 des Abtransport-Förderers 23 sowie ggf. ein Verschiebeantrieb 62 für die Übergabebrücke 55, die aus Platzgründen auch geteilt sein kann, und ein Hubantrieb 63 für den oder die Förderer im Bereich der Übergabeposition 28. Das Steuergerät 60 erhält seine Signale auch von der papierverarbeitenden Maschine 13 und von einer Eingabeeinrichtung 64, mit der unterschiedliche Funktionen ausgelöst werden können. Diese könnte auch in unmittelbarer Verbindung mit anderen Maschinengruppen oder -funktionen stehen, beispielsweise einen Stau in einer Verpackungseinheit signalisieren und damit Funktionsumschaltungen auslösen.

### Verfahrensbeschreibung

Die Figuren 1 und 2 sowie 5 bis 10 zeigen aufeinanderfolgende Verfahrensschritte in einer Arbeitsweise, die man als geteilte Großtaktproduktion bezeichnen kann. Bei allen Darstellungen der Arbeitsweise (Figuren 1, 2 und 5 bis 15) sind die Greifer 48, 48a massiv schwarz dargestellt, wenn sie in ihrer Greifposition sind, d.h. einen Stapel 12 ergriffen haben, während sie mit normalen Umrandungslinien bzw. schraffiert gezeigt sind, wenn sie "leer" sind.

In Fig. 1 ist die Greifergruppe 58a (jeweils rechte Greifer 48a jedes Greiferpaars 38) in der Abholposition und hat eine auch als Großtakt bezeichnete Reihe 66 von nebeneinanderliegenden Stapeln 12 ergriffen, wobei jeder Greifer 48a zwischen den Greiferspitzen 53 seiner beiden Greiferfinger 49 mittig an dem Stapel angreift und diesen an der Vorderkante einklemmt. Während dessen steht die Greifergruppe 58 mit den Greifern 48 in einer Endposition am entgegengesetzten Ende der jeweiligen Greiferträger 39, jenseits auch der äußeren Abtransport-Förderstrecke 25. Dies ist auch in Fig. 2 gezeigt.

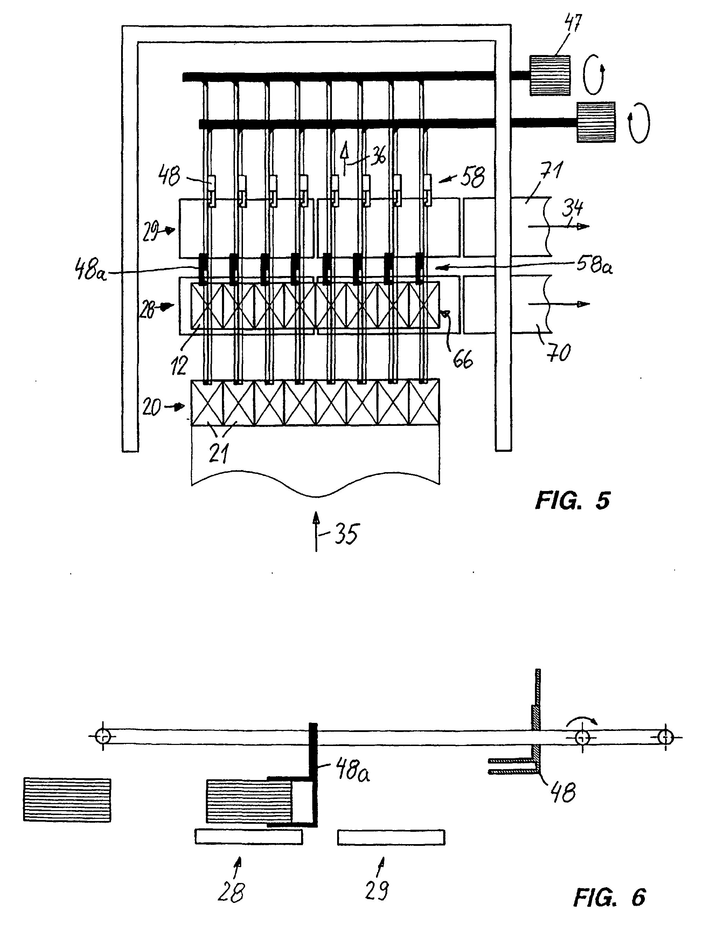

Fig. 5 zeigt nun, dass durch Inbetriebnahme des zur Greifergruppe 58a gehörenden Antriebs 47 alle Greifer 48a dieser Gruppe in Übergaberichtung 36 bewegt werden und damit die Stapelreihe 66 mit den Stapeln 12 in die Übergabeposition 28 gezogen haben.

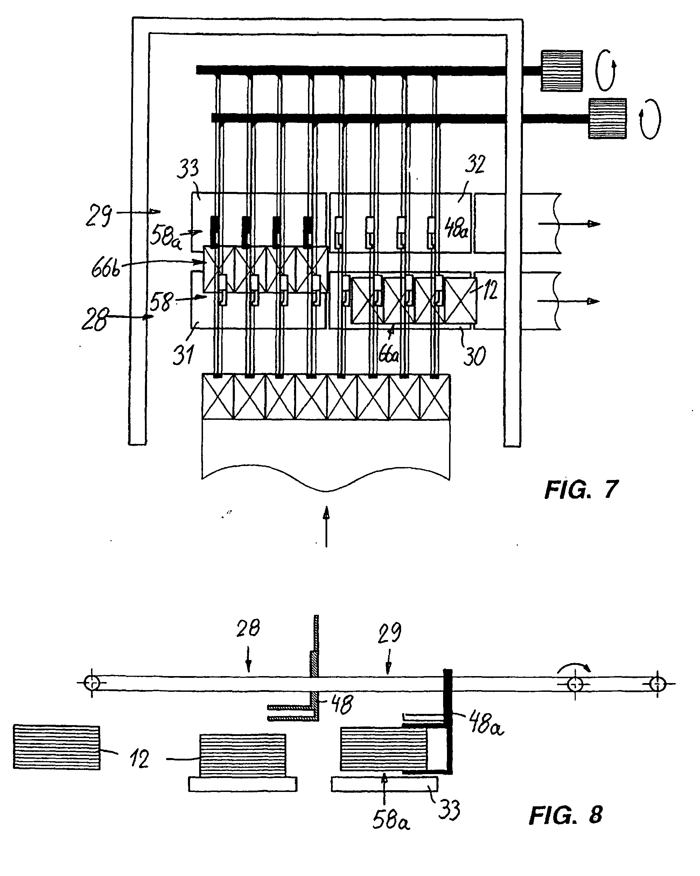

In dieser Lage wird über ein Steuersignal vom Steuergerät 60 ein Teil der Greifer der Greifergruppe 58a geöffnet, wie aus Fig. 7 hervorgeht. Die Teil-Stapelreihe 66a mit den vier rechten Stapeln 12 bleibt also auf dem Teilförderer 30 in der Übergabeposition 28 liegen, während die Teil-Stapelreihe 66b mit den linken vier Stapeln 12 von den noch geschlossenen Greifern weiter in Richtung auf das Teilförderband 33 in der Übergabeposition 29 gezogen werden. Unmittelbar an das Ablegen der ersten Teilreihe 66a auf dem Teilförderer 30 kann dieser in Abtransportrichtung 34 in Gang gesetzt werden, so dass die erste Hälfte der Stapel abtransportiert wird. Wegen der Trennung der Abtransport-Förderstrecke 24 in die Teilförderstrecken 30, 31 kann dieser Abtransport schon beginnen, während die linke Teilreihe 66b sich noch in Übergabeposition 28, d.h. auf dem dann stehen bleibenden Teilförderband 31 befindet.

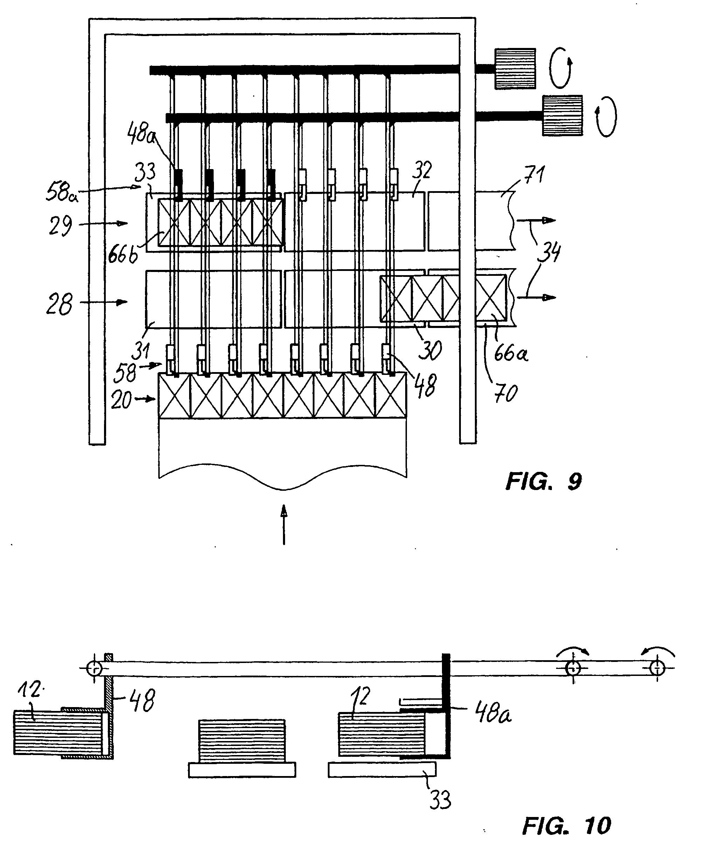

Fig. 8 zeigt eine etwas weiter fortgeschrittene Arbeitsphase, bei der die Greifergruppe 58a die von ihr noch erfasste linke Teil-Stapelreihe 66b bereits auf das Teilförderband 33 in der Übergabeposition 29 transportiert hat, während die vier linken Greifer 48a geöffnet sind.

Während dieser Verfahrensschritte bewegte sich die Greifergruppe 58 von ihrer Position nach Fig. 1 kontinuierlich in Richtung auf die Annahmeposition, d.h. die Stapelstation 20, die sie in Fig. 9 erreicht hat. Dabei passierten die Greifer dieser Gruppe 58 sowohl die Greifer der Gruppe 58a als auch die Stapel, indem sie über diese hinweg liefen, da sie durch die Bewegungszylinder 50 in eine Stellung gebracht worden waren, in der sie zwischen den Greiferfingern der anderen Gruppe hindurch liefen, also sie kollisionsfrei passierten. Dazu werden die Greifer in eine weitgehend geschlossene Position gebracht.

Fig. 9 zeigt die linke Teil-Stapelreihe 66b auf dem Teilförderband 33 in der Übergabeposition 29. Deren Greifer 58a werden nun geöffnet, so dass die Teil-Stapelreihe durch Ingangsetzen der Abtransport-Förderstrecke 25 inklusive der Teilförderer 32, 33 in Abtransportrichtung 34 bewegt wird. In der Zwischenzeit hat auch die rechte Teil-Stapelreihe 66a die Übergabestation 27 fast verlassen und läuft auf dem Transportband 70 der Abtransport-Förderstrecke 24 weiter. Dieser Teil des Abtransport-Förderers bildet einen sog. Stauförderer, bei dem durch Verringerung der Geschwindigkeit der davor laufenden Teil-Stapelreihe bzw. Erhöhung der Geschwindigkeit der Teil-Stapelreihe 66a ihr gegenüber die einzelnen Reihen lückenlos aneinander angeschlossen werden, um sie später durch ein wiederum schneller laufendes Förderband auf einen konstanten Abstand zu vereinzeln. Das gleiche geschieht für die Teil-Stapelreihe 66b auf der Abtransport-Förderstrecke 25.

Während dieses Arbeitstaktes hat sich in der Stapel-Position 20 eine neue Stapelreihe 66 gebildet und die Greifergruppe 58, die ggf. in einer Warteposition vor dieser Stapelreihe auf die Vollendung der Stapel wartete, ist an die Stapelreihe herangefahren worden und beginnt, sie zu ergreifen, was in Fig. 9 und 10 angedeutet ist. Die Greifer 48a, die sich von der Teil-Stapelreihe 66b gelöst haben, gehen danach wieder in die Endposition, die in Fig. 1 und 2 gezeigt ist, so dass der Zyklus erneut beginnen kann, jedoch mit der jeweils anderen Greifergruppe.

Es ist also zu erkennen, dass hier eine alternierende Arbeitsweise vorliegt, in der beide Greifergruppen jeweils eine Stapelreihe 66 in der Übergabestation 27 an die Abtransport-Förderer 23 übergeben. Unmittelbar an die Ablage der letzten Teil-Stapelreihe 66d steht die Greifergruppe 58 bereits wieder zur Stapel-Übernahme an der Stapelstation 20 bereit. Durch das Vermeiden der Totzeit, die anderenfalls nötig wäre, um die Greifer wieder zurückzufahren, wird nicht nur eine höhere Arbeitsgeschwindigkeit und kürzere Taktzeit möglich, sondern die Übergabe kann auch schonender und mit geringeren Beschleunigungen und Geschwindigkeiten der Übergabe erfolgen. Somit werden Beschädigungen der Stapel, ihrer Oberflächen und Ausrichtung vermieden.

Durch die Verwendung von jeweils zwei Teil-Förderern für eine Abtransport-Förderstrecke in der Übergabestation 27 ist es möglich, mit dem Abtransport der Teil-Stapelreihe 66a bereits zu beginnen, während die Teil-Stapelreihe 66b sich noch in der Stapelposition 29, d.h. über dem Teil-Förderer 31, befindet. Wenn man aber darauf verzichtet, dann kann auch auf Anordnung der Teil-Förderer verzichtet werden und im Bereich der Übergabestation jeweils nur ein Förderband für die Übergabe-Positionen 28, 29 verwendet werden. In diesem Falle ist es auch einfacher möglich, wahlweise beliebige Aufteilungen von Stapelreihen vorzunehmen, beispielsweise eine Aufteilung in 5 : 3 Stapeln im dargestellten Beispiel. Dies ist durch die individuelle Ansteuerung der Greifer-Betätigung möglich, obwohl die einzelnen Greifer-Gruppen stets gemeinsam entlang der Übergabe-Richtung bewegt werden. Auf diese Weise könnte man die unterschiedlichen Arbeitsgeschwindigkeiten von Verpackungsmaschinen etc. berücksichtigen.

Im Falle, dass eine der Abtransport-Förderstrecken von einem Stau beeinträchtigt ist, ist es leicht möglich, die gesamte Stapelreihe 66 auf einer der Abtransport-Förderstrecken, d.h. in den Übergabe-Positionen 28 oder 29 zu platzieren und gemeinsam abzutransportieren. Dazu bedarf es lediglich eines Steuerimpulses, der automatisch oder über die Eingabe 64 gegeben werden kann.

Fig. 11 bis 15 veranschaulichen die Arbeitsweise, bei der generell jeweils eine gesamte Stapelreihe 66 von einer Greifergruppe erfasst und auch gemeinsam auf je einer Förderstrecke abtransportiert wird.

Fig. 11 zeigt, dass die Greifergruppe 58 die Stapelreihe 66 bereits ergriffen hatte und schon auf den. Förderer 30a in der Übergabe-Position 29 gezogen hat. Dieser Förderer ist über die gesamte Übergabe-Position 28 zusammenhängend, d.h. nicht in Teil-Förderer unterteilt und somit auch gemeinsam angetrieben.

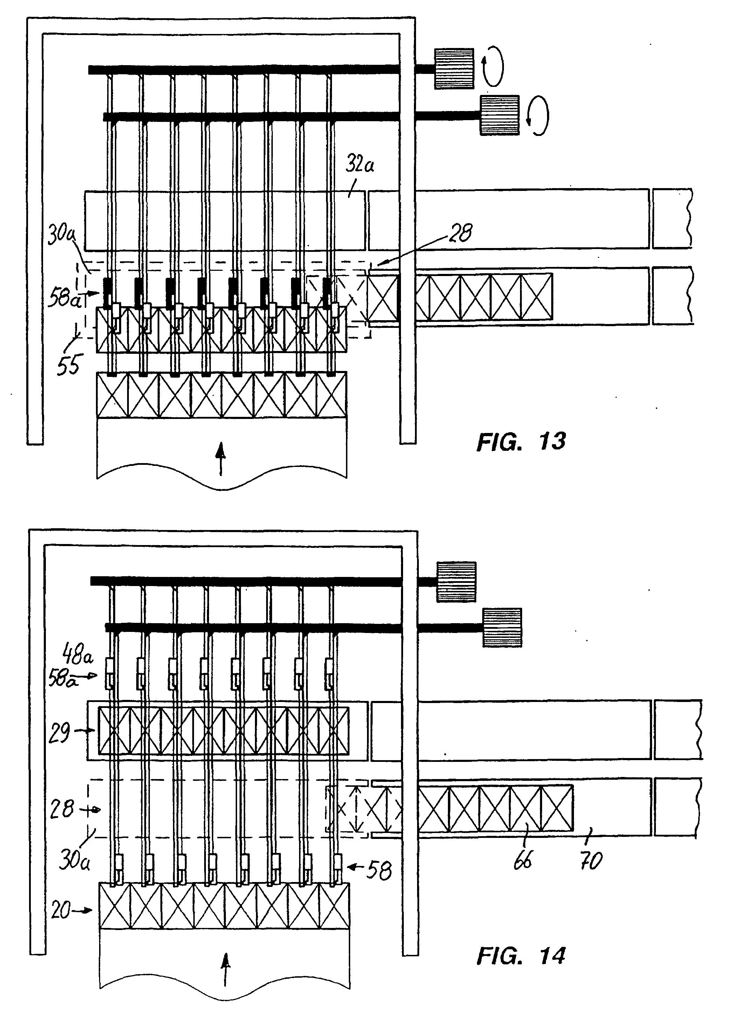

Fig. 12 zeigt, dass die Greifer der Gruppe 58 sich geöffnet hatten und die Stapelreihe 66 freigegeben haben, so dass sie nun auf dem Förderband 70 des Abtransport-Förderers 25 aus der Übergabestation in Abtransportrichtung 34 transport wird. Durch Strichlierung des Förderers 30a ist angedeutet, dass dieser nun abgesenkt und von der Übergabebrücke 55 überdeckt wird, so dass die in der Zwischenzeit entgegen der Übergaberichtung 36 zurücklaufende Greifergruppe 58a die nächste Stapelreihe 66 ergreifen konnte und in Fig. 13 bereits begonnen hat, sie auf der Übergabebrücke 55 über die Stapelposition 28 hinweg zu ziehen, während darunter der Abtransport der vorigen Stapelreihe 66 weitergeht.

Fig. 14 zeigt die Position, in der die Greifergruppe 58a die Stapelreihe 66 bereits auf dem Förderer 32a in der Übergabe-Position 29 abgelegt hat und die Greifer 48a schon wieder in ihrer "leeren" Ruhestellung sind.

Unterdessen ist die Greifergruppe 58 bereits wieder in der Annahme-Position bei der Stapelstation 20, so dass sie sofort wieder mit der Übergabe beginnen kann, wenn die Stapelreihe 66 die Übergabe-Position 28 verlassen hat und der Senk-Förderer 30a wieder in Höhe des Übergabeniveaus angehoben wurde.

Fig. 15 zeigt eine Arbeitsstellung, die etwa der nach Fig. 11 entspricht, wobei jedoch die Greifergruppe 58a bereits weiter in Rücklaufrichtung vorangekommen ist. Es ist daraus zu erkennen, dass die einzelnen Stapelreihen 66 durch die doppelte Greiferausstattung dicht hintereinander auf die Abtransport-Förderbänder 70, 71 gebracht werden können, so dass das Lückenschließen zwischen den einzelnen Stapelreihen problemlos geschieht.

Auch bei dieser Ausführung und Arbeitsweise ist es möglich, bei der Notwendigkeit, die gesamte Produktion der Papierverarbeitungsmaschine 13 auf nur einer Abtransport-Förderstrecke abzuführen, dies durch Öffnen der Greifer in jeweils in der gleichen Übergabe-Position zu bewerkstelligen:

Durch die Erfindung wird infolge der Vermeidung von Totzeiten die für den Abtransport der Stapel benötigte Zeit vergrößert. Dennoch kann es bei weiterer Erhöhung der Arbeitsgeschwindigkeit geschehen, dass infolge der Beschleunigung der Stapel durch die diskontinuierlich angetriebenen Förderer 30 bis 33 sowie 30a, 32a Stapel in ihrer exakten Ausrichtung verrutschen, insbesondere, wenn es sich um glatte Papiere handelt. Zu diesem Zeitpunkt sind die Stapel ja nicht mehr durch die Greifer oder Zangen erfasst.

Zur Lösung dieses Problems ist es möglich, die gesamte Greifermechanik so auszubilden, dass sie während der Beschleunigungsphase, d.h. beim Anlaufen der Bandantriebe, für die Förderer 30 bis 33, 30a, 32a ein kurzes Stück in Abtransportrichtung 34 mitlaufen, wobei die an den betreffenden Stapeln angreifenden Greifer noch geschlossen sind. Diese würden sich dann erst öffnen, wenn die erste Beschleunigungsphase schon vorbei ist. Danach könnte die Greifermechanik wieder in ihre Ausgangsposition zurücklaufen. Diese Hin- und Herbewegung, die den gesamten Rahmen 26 der Übergabestation betreffen könnte, kann durch einen mechanisch oder elektrisch mitdem Antrieb der entsprechenden Förderbänder gekoppelten Antrieb gewirkt werden.

Bei dieser Ausführung muss durch entsprechende Steuerung lediglich dafür gesorgt werden, dass diese Querbewegung der Greifer in Abtransportrichtung nur erfolgt, wenn ausschließlich die Greifer geschlossen sind, die auf dem zu startenden Förderer liegen. Auch diese Lösung fördert den störungsfreien Ablauf der Übergabe bei hohen Arbeitsgeschwindigkeiten.

## Patentansprüche

1. Fördereinrichtung für durch Blattlagen gebildete Stapel (12) aus Papier oder dgl. mit
1.1 einer Antransport-Station (22), in der mehrere Stapel (12) in einer Stapelreihe (66) in nebeneinander liegenden Stapelpositionen (21) zur Übergabe bereitgestellt werden,
1.2 einem Abtransport-Förderer (23), der wenigstens zwei in wenigstens einer Abtransport-Richtung (34) fördernde, im wesentlichen parallel zueinander verlaufende Abtransport-Förderstrecken (24, 25), aufweist,
1.3 einer Übergabe-Station (27), in die der Abtransport-Förderer (23) teilweise hineinreicht und die Übergabepositionen (28, 29) auf jeder der Abtransport-Förderstrecken (24, 25) aufweist,
1.4 und Übergabeförderern (37) mit Greifern (48, 48a), die zum Ergreifen und Freigeben der Stapel (12) betätigbar sind und in einer quer zur Abtransportrichtung (34) verlaufenden Übergaberichtung (36) zwischen der Antransport-Station (22) und der Übergabe-Station (27) bewegbar sind, um die ergriffenen und quer transportierten Stapel (12) dort abzulegen,
**dadurch gekennzeichnet, dass**
1.5 jeder Stapelposition (21) ein Greiferpaar (38) aus zwei Greifern (48, 48a)zugeordnet ist,
1.6 die unabhängig voneinander bewegbar und
1.7 zum Ergreifen bzw. Freigeben der Stapel (12) betätigbar sind.

2. Fördereinrichtung nach Anspruch 1, **dadurch gekennzeichnet, dass** die Greifer (48, 48a) eines Greiferpaars (38) an einem gemeinsamen Greiferträger (39) vorgesehen sind, vorzugsweise zu beiden Seiten desselben, wobei insbesondere Greiffinger (49) der Greifer so ausgebildet sind, dass die Stapel (12) von beiden Greifern (48, 48a) zentrisch gegriffen werden, die Greifer jedoch einander längs der Übergaberichtung kollisionsfrei passieren können.

3. Fördereinrichtung nach Anspruch 1 oder 2, **dadurch gekennzeichnet, dass** der Greiferträger (39) beidseitig Führungen (40) für die Greifer (48, 48a) aufweist, dass an den Greifern jeweils ein Längsantrieb, vorzugsweise in Form eines umlaufenden Zugelements (42), wie eines Riemens oder einer Kette, angreift und/oder die Greifer (48, 48a) Greifantriebe (52) zum Bewegen der Greiffinger (49) quer zur Übergaberichtung (16) aufweisen, insbesondere in Form von Pneumatik- bzw. Hydraulikantrieben (50, 51).

4. Fördereinrichtung nach einem der vorhergehenden Ansprüche, **dadurch gekennzeichnet, dass** wenigstens eine der Abtransport-Förderstrecken (24, 25), vorzugsweise die der Antransportstation (22) nächstliegende, absenkbar und insbesondere durch eine die Stapel über diese Förderstrecke leitende Übergabe-Brücke (55) zeitweise überbrückbar ist.

5. Fördereinrichtung nach einem der vorhergehenden Ansprüche, **dadurch gekennzeichnet, dass** wenigstens eine der Abtransport-Förderstrecken (24, 25) in der Übergabestation (27) in wenigstens zwei Teilförderer (30, 31; 32, 33) geteilt und vorzugsweise die Teilförderer voneinander unabhängig antreibbar sind.

6. Fördereinrichtung nach einem der vorhergehenden Ansprüche, **dadurch gekennzeichnet, dass** die Greifer (48, 48a) außer einer Greif-Position, in der sie einen Stapel (12) ergreifen, und einer Löse-Position, die sie vor und nach dem Ergreifen einnehmen, eine Überfahr-Position aufweisen und in diese bewegbar angetrieben sind, die es erlaubt, einen auf einem der Abtransport-Förderer (24, 25) liegenden Stapel (12) kollisionsfrei zu passieren.

7. Verfahren zur Überführung von durch Blattlagen gebildete Stapel (12) aus Papier oder dgl. zwischen einer Antransport-Station (22), in der mehrere Stapel (12) in einer Stapelreihe (66) in nebeneinander liegenden Stapel-Positionen (21) zur Übergabe bereitgestellt werden und einem Abtransport-Förderer (23), der wenigstens zwei in wenigstens einer Abtransport-Richtung (34) fördernde, im wesentlichen parallel zueinander verlaufende Abtransport-Förderstrecken (24, 25), aufweist, in einer Übergabe-Station (27), in die der Abtransport-Förderer (23) teilweise hineinreicht und die Übergabe-Positionen (28/29) auf jeder der Abtransport-Förderstrecken (24, 25) aufweist, mittels Übergabe-Förderern (27) mit Greifern (48, 48a), die zum Ergreifen und Freigeben der Stapel betätigbar sind und in einer quer zur Abtransportrichtung verlaufenden Übergaberichtung (36) zwischen der Antransport-Station (12) und der Übergabe-Station (27) bewegt werden und die ergriffenen und quer transportierten Stapel (12) dort ablegen, **dadurch gekennzeichnet, dass** nacheinander aus jeder der Stapelpositionen (21) abtransportierte Stapel (12) abwechselnd aufeinanderfolgend von unterschiedlichen Greifern (48, 48a) eines Greiferpaars (38) ergriffen, bewegt und abgelegt werden.

8. Verfahren nach Anspruch 7, **dadurch gekennzeichnet, dass** jeweils ein Greifer (48, 48a) eines Greiferpaars (38) zu einer Greifergruppe (58, 58a) nebeneinander liegender Greiferpaare gehört und jede der Gruppen gemeinsam, aber unabhängig von der anderen Gruppe in und entgegen der Übergaberichtung (36) antreibbar und betätigbar sind.

9. Verfahren nach Anspruch 7 oder 8, **dadurch gekennzeichnet, dass** Greifer (48, 48a) innerhalb einer Gruppe, gegebenenfalls in Untergruppen zusammengefasst, unabhängig voneinander betätigbar sind.

10. Verfahren nach einem der Ansprüche 7 bis 9, **dadurch gekennzeichnet, dass** einer der Greifer (48, 48a) eines Greiferpaars (38) eine entgegen der Übergaberichtung verlaufende Rückbewegung macht, während der andere Greifer des Paars in Eingriff mit einem Stapel (12) ist.

11. Verfahren nach einem der Ansprüche 7 bis 10, **dadurch gekennzeichnet, dass** jeweils ein Greifer (48, 48a) eines Greiferpaars (38) mit entsprechenden Greifern benachbarter Greiferpaare gemeinsam als Greifergruppe in und entgegen der Übergaberichtung bewegt werden, gegebenenfalls jedoch einige davon, in wenigstens einer Untergruppe zusammengefasst, unabhängig von den anderen der gleichen Greifergruppe, geöffnet und/oder geschlossen werden.

12. Verfahren nach einem der Ansprüche 7 bis 11, **dadurch gekennzeichnet, dass** von den von einer Greifergruppe (58, 58a) gemeinsam ergriffenen und aus den Stapel-Positionen (21) abgezogenen Stapeln (12) einer Stapelreihe (66) eine Teil-Stapelreihe (66a) auf einer ersten der Abtransport-Förderstrecken (24) und eine weiterere (66b) auf einer weiteren Abtransport-Förderstrecke (15) abgelegt werden.

13. Verfahren nach einem der Ansprüche 7 bis 12, **dadurch gekennzeichnet, dass** die von einer Greifergruppe gemeinsamen ergriffenen und aus den Stapel-Positionen (21) abgezogenen Stapel (12) einer Stapelreihe (22) abwechselnd aufeinanderfolgend auf einer ersten oder weiteren Abtransport-Förderstrecke (24, 25) abgelegt werden, wobei die auf der weiteren Abtransport-Förderstrecke (25) abzulegende Stapelreihe über die gegebenenfalls abgesenkte und vorzugsweise im Abtransport befindliche Stapelreihe auf der ersten Abtransport-Stapelstrecke hinweg transportiert wird.

14. Verfahren, insbesondere nach einem der Ansprüche 7 bis 13, **dadurch gekennzeichnet, dass** Greifer, die in einer Übergabestation (27) Stapel (12) aus Blattlagen zwischen einer Antransportstation (22) und wenigstens einem Abtransportförderer (24, 25) überführen, beim Anlaufen der diskontinuierlich angetriebenen Abtransportförderer (24, 25) die Stapel (12) klemmend halten und zumindest während eines Teils der Anlaufphase in Abtransportrichtung mitlaufen.

## Claims

1. Conveyor system for stacks (12) of paper or the like formed by sheet layers, having
1.1 a supply station (22), where there are several stacks (12) in a stack row (66) in juxtaposed stacking positions (21) for transfer purposes,
1.2 a discharge conveyor (23) having at least two substantially parallel discharge conveyor sections (24, 25) conveying in at least one discharge direction (34),
1.3 a transfer station (27) into which the discharge conveyors (23) partly extend and having transfer positions (28, 29) on each of the discharge conveyor sections (24, 25)
1.4 and transfer conveyors (37) with grippers (48, 48a) operable for gripping and releasing the stacks (12) and movable in a transfer direction (36) transverse to the discharge direction (34), between the supply station (22) and the transfer station (27), in order to deposit there the gripped and transversely conveyed stacks (12),
wherein
1.5 with each stacking position (21) is associated a gripper pair (38) comprising two grippers (48, 48a),
1.6 movable independently of one another and
1.7 operable for gripping or releasing the stacks (12).

2. Conveyor system according to Claim 1, wherein the grippers (48, 48a) of a gripper pair (38) are provided on a common gripper support (39), preferably on either side thereof and in particular gripping fingers (49) of the grippers are constructed in such a way that the stacks (12) are centrally gripped by both grippers (48, 48a), but the grippers can pass one another in collision-free manner along the transfer direction.

3. Conveyor system according to claim 1 or 2, wherein the gripper support (39) has on either side guides (40) for the grippers (48, 48a), wherein on the grippers in each case engages a longitudinal drive, preferably in the form of a revolving tension element (42), such as a strap or chain and/or wherein the grippers (48, 48a) have gripper drives (52) for moving the gripping fingers (49) transversely to the transfer direction (16), particularly in the form of pneumatic or hydraulic drives (50, 51).

4. Conveyor system according to one of the preceding claims, wherein at least one of the discharge conveyor sections (24, 25), preferably that closest to the supply station (22), is lowerable and can temporarily be bridged by a transfer bridge (55) guiding the stacks over said conveyor section.

5. Conveyor system according to one of the preceding claims, wherein at least one of the discharge conveyor sections (24, 25) in the transfer station (27) is divided into at least two partial conveyors (30, 31, 32, 33) and preferably the partial conveyors can be driven independently of one another.

6. Conveyor system according to one of the preceding claims, wherein the grippers (48, 48a), in addition to a gripping position where they grip a stack (12) and a release position which they assume before and after gripping, have an overtravel position and are movably driven therein so as to make it possible to pass in collision-free manner a stack (12) located on one of the discharge conveyors (24, 25).

7. Method for transferring stacks (12) of paper or the like formed by sheet layers between a supply station (22), in which are provided for transfer several stacks (12) in a stack row (66) in the form of juxtaposed stacking positions (21) and a discharge conveyor (23), which has at least two substantially parallel discharge conveyor sections (24, 25) conveying in at least one discharge direction (34), in a transfer station (27) into which partially extends the discharge conveyors (23) and transfer positions (28, 29) on each of the discharge conveyor sections (24, 25), by means of transfer conveyors (27) with grippers (48, 48a) operable for gripping and releasing stacks and movable in a transfer direction (36) transverse to the discharge direction between the supply station (12) and the transfer station (27) and deposit there the gripped and transversely conveyed stacks (12), whereinstacks (12) successively conveyed from each of the stacking positions (21) are alternately and successively gripped, moved and deposited by different grippers (48, 48a) of a gripper pair (38).

8. Method according to claim 7, wherein in each case one gripper (48, 48a) of a gripper pair (38) belongs to a gripper group (58, 58a) of juxtaposed gripper pairs and each of the groups together, but independently of the other group can be driven and operated in and counter to the transfer direction (36).

9. Method according to claim 7 or 8, wherein grippers (48, 48a) within a group, optionally combined in subgroups, are operable independently of one another.

10. Method according to one of the claims 7 to 9, wherein one of the grippers (48, 48a) of a gripper pair (38) makes a return movement counter to the transfer direction, whilst the other gripper of the pair is in engagement with a stack (12).

11. Method according to one of the claims 7 to 10, wherein in each case one gripper (48, 48a) of a gripper pair (38) with corresponding grippers of adjacent gripper pairs can be moved jointly as a gripper group in and counter to the transfer direction, but optionally some, combined into at least one subgroup, are opened and/or closed independently of the others in the same gripper group.

12. Method according to one of the claims 7 to 11, wherein from the stacks (12) of a stack row (66) gripped jointly by a gripper group (58, 58a) and drawn from the stacking positions (21), one partial stack row (66a) is placed on a first of the discharge conveyor sections (24) and a further row (66b) on a further discharge conveyor section (15).

13. Method according to one of the claims 7 to 12, wherein the stacks (12) of a stack row (22) jointly gripped by a gripper group and drawn from the stack positions (21) are deposited in alternating, successive manner on a first or further discharge conveyor section (24, 25), the stack row to be placed on the further discharge conveyor section (25) is conveyed on the first discharge conveyor section over and beyond the optionally lowered stack row, which is preferably being discharged.

14. Method, particularly according to one of the Claims 7 to 13, wherein grippers, which in a transfer station (27) transfer stacks (12) of sheet layers between a supply station (22) and at least one discharge conveyor (24, 25), on starting up the discontinuously driven discharge conveyors (24, 25) clamp the stacks (12) and also run in the discharge direction, at least during part of the starting phase.

## Revendications

1. Convoyeur pour des piles (12) de papier ou similaires formées de couches de feuilles présentant
1.1 une station d'amenée (22), dans laquelle plusieurs piles (12) dans une rangée de piles (66) attendent le transfert l'une à côté de l'autre dans des positions de pile (21),
1.2 un convoyeur de décharge (23) présentant au moins deux voies de transport de décharge (24, 25) essentiellement parallèles entre elles et réalisant le transport dans au moins une direction de décharge (34),
1.3 une station de transfert (27) dans laquelle le convoyeur de décharge (23) s'étend au moins en partie et qui présente les positions de transfert (28, 29) sur chacune des voies de transport de décharge (24, 25),
1.4 et des convoyeurs de transfert (37) avec des outils de préhension (48, 48a) qui peuvent être actionnés pour saisir et relâcher les piles (12) et qui peuvent être déplacés dans une direction de transfert (36) entre la station d'amenée (22) et la station de transfert (27) pour y déposer les piles (12) saisies et transversalement transportées,
**caractérisée en ce que**
1.5 à chaque position de pile (21) correspond une paire d'outil de préhension (38) composée de deux outils de préhension (48, 48a),
1.6 qui peuvent être déplacés indépendamment l'un de l'autre et
1.7 qui peuvent être actionnés pour saisir ou encore relâcher les piles (12).

2. Convoyeur d'après la revendication 1, **caractérisé en ce que** les outils de préhension (48, 48a) d'une paire (38) sont prévus sur un support d'outils de préhension (39) commun, de préférence des deux côtés de celui-ci, des doigts de grappin (49) des outils de préhension étant notamment réalisés de manière que les piles (12) soient saisies de façon centrée par les deux outils de préhension (48, 48a) et que les outils de préhension puissent toutefois passer au large l'un de l'autre sans collisions en direction de transfert.

3. Convoyeur d'après la revendication 1 ou 2, **caractérisé en ce que** le support d'outils de préhension (39) présente des deux côtés des guidages (40) pour les outils de préhension (48, 48a), **en ce qu'**un organe moteur longitudinal agit respectivement sur les outils de préhension, de préférence sous forme d'un élément de traction (42) giratoire, tel qu'une courroie ou une chaîne et/ou que les outils de préhension (48, 48a) présentent des moyens d'entraînement de pince (52) pour déplacer les doigts de grappin (49) transversalement par rapport à la direction de transfert (16), notamment sous forme de systèmes d'entraînement pneumatique ou encore hydraulique (50, 51).

4. Convoyeur d'après une des revendications précédentes, **caractérisé en ce qu'**au moins une des voies de transport de décharge (24, 25) soit située de préférence le plus près de la station d'amenée (22), qu'elle permette un déplacement vers le bas et qu'on puisse temporairement la franchir notamment au moyen d'un pont de transfert (55) conduisant les piles au-dessus de cette voie de transport.

5. Convoyeur d'après une des revendications précédentes, **caractérisé en ce qu'**au moins une des voies de transport de décharge (24, 25) soit subdivisée dans la station de transfert (27) en au moins deux convoyeurs partiels (30, 31 ; 32, 33) et que les convoyeurs partiels puissent être de préférence actionnés indépendamment l'un de l'autre.

6. Convoyeur d'après une des revendications précédentes, **caractérisé en ce que** les outils de préhension (48, 48a) présentent en plus d'une position de prise, dans laquelle ils saisissent une pile (12) et en plus d'une position de relâchement, qu'ils occupent avant et après la prise, une position de dépassement, et qu'ils sont menées de manière déplaçable vers celles-ci, la position de dépassement permettant de passer sans collisions au large d'une pile (12) située sur un des convoyeurs de décharge (24, 25).

7. Procédé pour le transfert de piles (12) de papier ou similaires en couches de feuilles entre une station d'amenée (22), dans laquelle plusieurs piles (12) dans une rangée de piles (66) attendent le transfert l'une à côté de l'autre dans des positions de pile (21), et un convoyeur de décharge (23) présentant au moins deux voies de transport de décharge (24, 25) essentiellement parallèles entre elles et réalisant le transport dans au moins une direction de décharge (34), dans une station de transfert (27), dans laquelle le convoyeur de décharge (23) s'étend au moins en partie et qui présente les positions de transfert (28/29) sur chacune des voies de transport de décharge (24, 25), au moyen de convoyeurs de transfert (27) avec des outils de préhension (48, 48a), qui peuvent être actionnés pour saisir et relâcher les piles et qui sont déplacés dans une direction de transfert (36) s'étendant transversalement par rapport à la direction de décharge, entre la station d'amenée (12) et la station de transfert (27), pour y déposer les piles (12) saisies et transversalement transportées, **caractérisé en ce que** des piles (12) enlevées consécutivement de chaque position de pile (21) soient saisies, déplacées et déposées de manière-alternativement consécutive par des outils de préhension (48, 48a) d'une paire d'outils de préhension (38).

8. Procédé d'après la revendication 7, **caractérisé en ce que** respectivement un outil de préhension (48, 48a) d'une paire d'outils (38) appartient à un groupe d'outils de préhension (58, 58a) de paires d'outils situés l'un à côté de l'autre et que chaque groupe peut être entraîné et actionné en commun avec les autres groupes mais indépendamment de ceux-ci en direction de transfert (36) et dans le sens opposé.

9. Procédé d'après la revendication 7 ou 8, **caractérisé en ce que** des outils de préhension (48, 48a) rassemblés à l'intérieur d'un groupe éventuellement en sous-groupes, peuvent être actionnés indépendamment l'un de l'autre.

10. Procédé d'après une des revendications de 7 à 9, **caractérisé en ce qu'**un des outils de préhension (48, 48a) d'une paire d'outils (38) effectue un mouvement de rappel en direction contraire à la direction de transfert, tandis que l'autre outil de préhension de la paire est engagé avec une pile (12).

11. Procédé d'après une des revendications de 7 à 10, **caractérisé en ce que** respectivement un outil de préhension (48, 48a) d'une paire d'outils (38) est déplacé en direction de transfert et en direction opposée en tant que groupe d'outils avec des outils de préhension correspondants de paires d'outils limitrophes, mais qu'éventuellement certains d'entre eux, rassemblés au moins en un sous-groupe, sont ouverts et/ou fermés indépendamment des autres du même groupe d'outils.

12. Procédé d'après une des revendications de 7 à 11, **caractérisé en ce qu'**une partie (66a) des piles (12) d'une rangée de piles (66) saisies ensemble par un groupe d'outils de préhension (58, 58a) et retirées des positions de pile (21) est déposée sur une première voie de transport de décharge (24) et qu'une autre partie (66b) est déposée sur une autre voie de transport de décharge (15).

13. Procédé d'après une des revendications de 7 à 12, **caractérisé en ce que** les piles (12) d'une rangée de piles (22) saisies ensemble par un groupe d'outils de préhension et retirées des positions de pile (21) sont déposées alternativement et consécutivement sur une première ou sur une autre voie de transport de décharge (24, 25), la rangée de piles qui doit être déposée sur l'autre voie de transport de décharge (25) étant transportée en passant par-dessus la rangée de piles éventuellement baissée et préférablement en état d'évacuation, située sur la première voie de piles de décharge.

14. Procédé d'après une des revendications de 7 à 13, **caractérisé en ce que** des outils de préhension, qui transfèrent dans une station de transfert (27) des piles (12) en couches de feuilles entre une station d'amenée (22) et au moins un convoyeur de décharge (24, 25), maintiennent les piles (12) de manière serrée pendant la mise en marche, actionnée de façon discontinue, du convoyeur de décharge (24, 25) et qu'ils suivent la direction de décharge au moins pendant une partie de la phase de démarrage.
